# EUROPEAN PATENT APPLICATION

(11) **EP 2 518 367 A1**
(43) Date of publication of application: **31.10.2012**
(21) Application number: 12165645.8
(22) Date of filing: 26.04.2012
(51) Int. Cl.: F16H 1/28, F16H 57/08

(54) **Load equalized gear system**

(30) Priority: 29.04.2011 US 201113097808
(71) Applicant: General Electric Company, Schenectady, NY 12345 (US)
(72) Inventor: Lopez, Fulton Jose, Niskayuna, NY New York 12309 (US); Erno, Daniel Jason, Niskayuna, NY New York 12309 (US); Jacobson, Erik Karl, Niskayuna, NY New York 12309 (US); Hidding, Edwin, Niskayuna, NY New York 12309 (US)
(74) Representative: Bedford, Grant Richard

(57) **Abstract**

A carrier 110 for use in a planetary gear system 100 is described. The carrier 110 has a plurality of openings 117 or slots 242 offset from a midline thereof. The carrier includes alignment mechanisms 125, 240 positioned in each of the plurality of openings or slots to substantially align each planet gear about the midline of the carrier. The carrier 110 may be used in a planetary gear system 100 for use in a wind turbine. One aspect incorporates eccentric rings in the openings 117. Another aspect incorporates inserts in the slots 242. Each of the rings and inserts has openings that, when properly positioned, will substantially bisect the carrier midline.

## Description

The invention relates generally to a gear system that incorporates planet and sun gears, and more particularly, to a gear system with a balanced load between the planet gears.

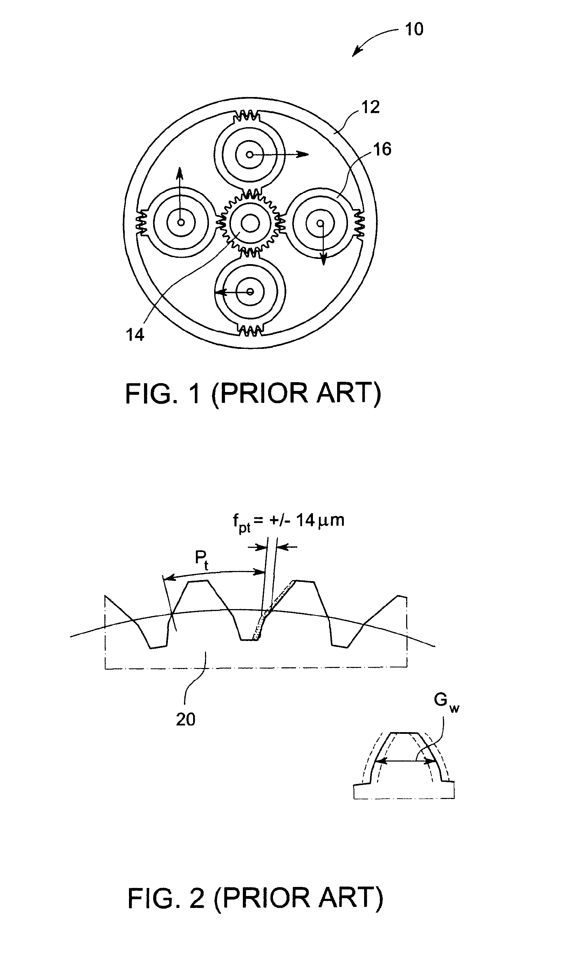

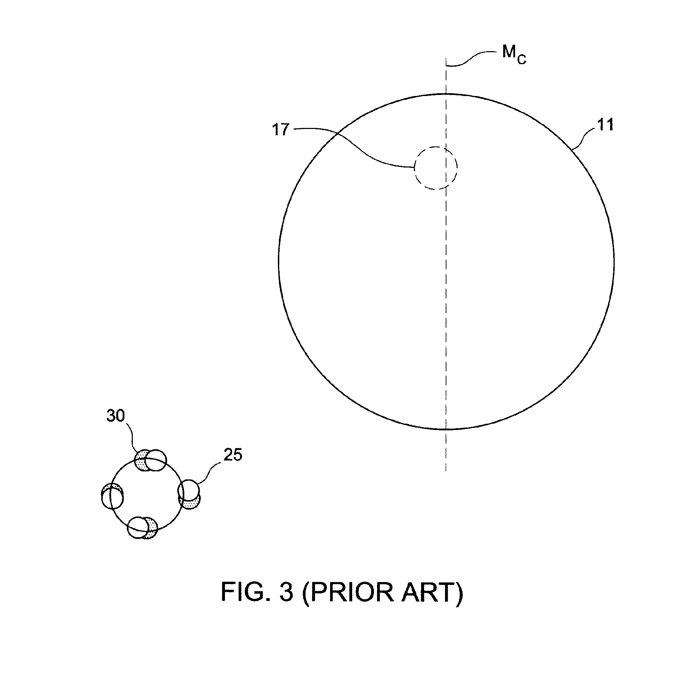

Planetary gear systems are known. Such systems 10, as shown schematically in FIGS. 1 and 3, include a carrier 11 which houses a centralized sun gear 14 and a plurality of planet gears 16. The planet gears 16 engage the rotating sun gear 14 and a stationary ring gear 12 encircling the carrier 11.

Planetary gear systems, such as system 10, find use in applications such as wind turbines. Other potential applications can be found in mill operations, the oil and gas industry, and the aviation industry.

For planetary gear systems utilizing multiple planet gears, a problem that has developed is the creation of an unbalanced load between the planet gears. As a rotating member - depending upon the gear system, the ring gear, the carrier, or the sun gear may supply an input to the gearbox - rotates, it places a force, or a load, on the planet gears. The load factor K_{γ} of a planetary gear system may be defined as :
K_{γ} = T_{Branch}N_{CP}/T_{Nom}

Where T_{Branch} is the torque for the gear with the heaviest load, N_{CP} is the number of planets, and T_{Nom} is the total nominal torque for the system. Ideally, the force should be the same on each planet gear, i.e., K_{γ} = 1.0, thereby creating a balanced load. However, for a variety of reasons planetary gear systems often suffer from unbalanced loads.

One reason is that the gear teeth 20 (FIG. 2) of the planetary gears are manufactured with a normal variance for such teeth. For example, the thickness of the gear teeth G_{w} may vary to an extent expected of tolerances for gear teeth. Additionally, the pitch - the distance between adjacent gear teeth 20 - also may vary.

Another reason is due to an inherent difficulty in properly position openings 17 in the carrier 11 that become the anchoring points for the planet gears 16. This difficulty is especially true for large carriers 11, such as those used in wind turbine gear systems. The equipment used to form openings, or planet pin bore holes, 17 within large carriers 11 does not have the accuracy to form and locate the openings 17 with the amount of precision and cost desired.

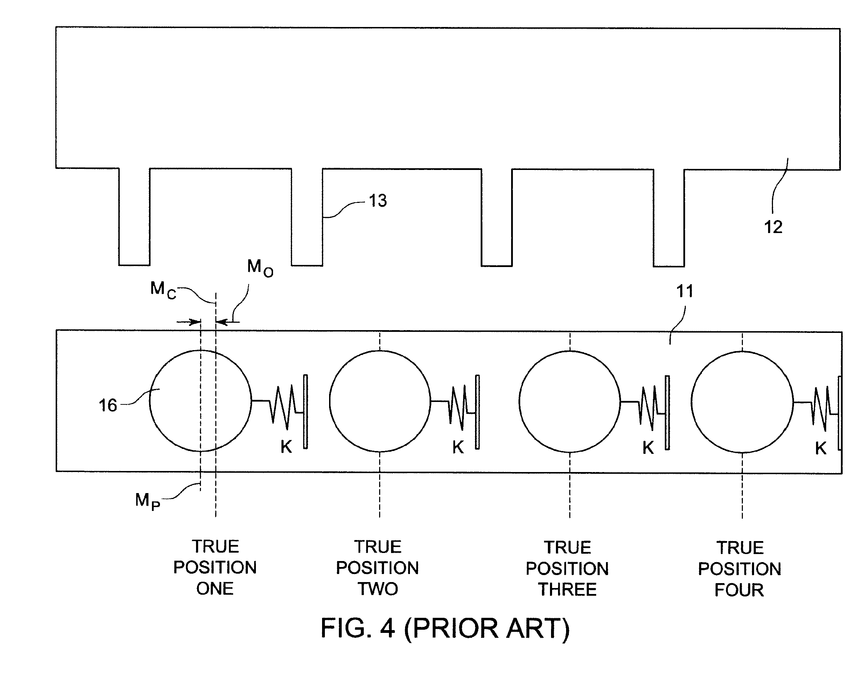

For planetary gear systems that utilize a number of planet gears greater than three, such as four planet gears, it is desired to anchor the planet gears along a midline M_{C} of the carrier 11. As shown in FIG. 3, the opening 17 formed in the carrier 11 which will become an anchoring point for a planet gear 16 is offset from the midline M_{C} of the carrier 11. By offset is meant that the midline of the opening 17 does not pass through the midline M_{C} of the carrier 11. When other openings 17 or formed in the carrier and the planet gears are anchored thereto, the true positions 25 of the planet gears are offset from the desired positions 30 of the planet gears. This offset can lead to a load imbalance between the planet gears, as will be further described with reference to FIGS. 4-7.

The ring gear 12 includes gear teeth 13 for engaging with the gear teeth of the planet gears 16. The carrier 11 and ring gear 12 are shown in FIGS. 4-7 linearly, as though each were folded out into a single plane. As shown FIG. 4, there is an offset M_{O} between the midline M_{C} of the carrier 11 and the midline M_{P} of a first planet gear 16. The midline M_{C} of the carrier 11 is aligned with where the first planet gear 16 would be located if it were in a true position. The other planet gears are shown to be aligned with their true positions.

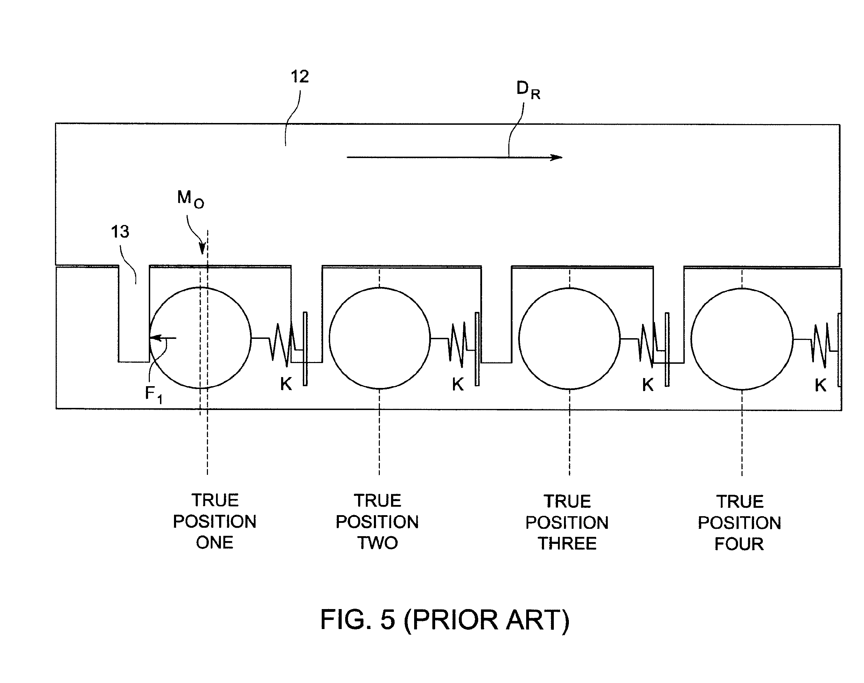

When the ring gear 12 engages with the planet gears and begins to rotate in direction D_{R}, a force F1 is exerted from the first planet gear 16 toward the gear tooth 13 (FIG. 5). Further, the offset M_{O} between the midline M_{C} of the carrier 11 and the midline M_{P} of a first planet gear 16 is lessened. This is due to the inherent stiffness in the carrier 11.

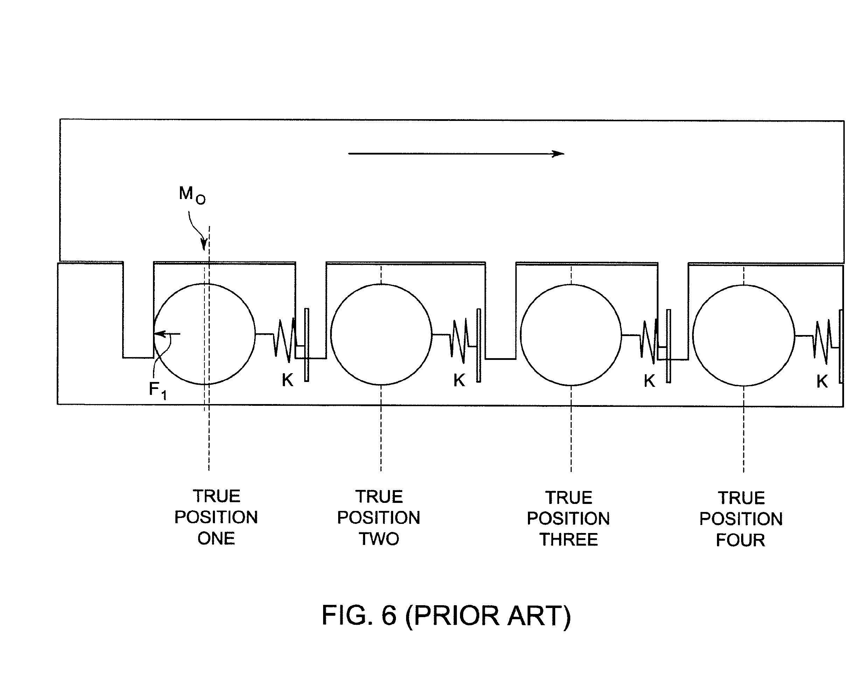

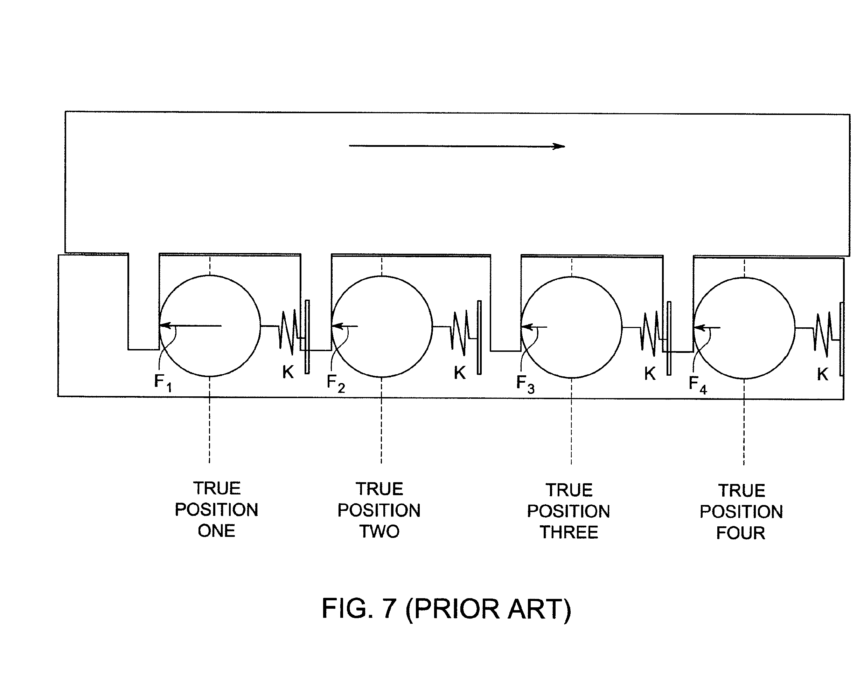

As the ring gear 12, or carrier 11, continues to rotate in direction D_{R}, as shown in FIG. 6, the force F1 increases and the offset M_{O} between the midline M_{C} of the carrier 11 and the midline M_{P} of a first planet gear 16 continues to diminish. Finally, as shown in FIG. 7, the inherent stiffness of the carrier 11 and the rotation of the ring gear 12 result in forces F2, F3 and F4 to be exerted from, respectively, the second, third and fourth planet gears 16. As illustrated, the forces F1-F4 are not balanced between the four planet gears 16.

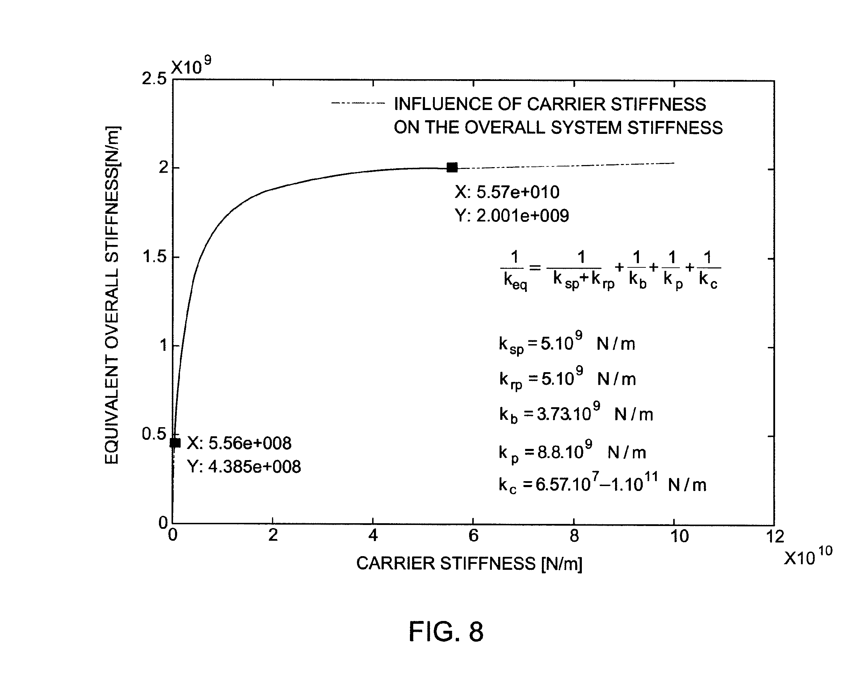

Known attempts at creating a planetary gear system with a balanced load between individual planet gears have focused on reducing the stiffness of the carrier, thereby reducing the stiffness of the planetary gear system as a whole. FIG. 8 illustrates graphically how the increase in stiffness of the carrier causes an increase in stiffness in the planetary gear system as a whole. Thus, attempts to lessen the carrier stiffness would concomitantly reduce the overall system stiffness. Such known attempts may be found in U.S. Pat. Pub. 2008/0194378 and U.S. Pat. Nos. 7,056,259 and 7,297,086.

Under normal manufacturing practices, the carrier bore hole when drilled will end up away from its centric true position. This is due to manufacturing tolerance limitations, complexity of the machined part, measuring capability, and human error. This scenario causes each planet gear to carry a load different from what they are designed for. Also, under normal loading conditions, the carrier may twist slightly. This twist may contribute to the misalignment between the planet gears and the ring gear/sun gear assembly. Depending on the number of planets and their respective tolerances, loads experienced by any single planet can increase dramatically, as much as 2X or more.

Reducing the load factor K_{γ} on a gear system will allow smaller system components to be utilized or allow greater loads on system components than are currently placed.

With some of these concerns in mind, an improved planetary gear system would be welcome in the art.

An embodiment of the invention includes a carrier for use in a planetary gear system and having a plurality of openings or slots offset from a midline thereof. The carrier includes alignment mechanisms positioned in each of the plurality of openings or slots to substantially align each planet gear about the midline of the carrier.

An embodiment of the invention includes a planetary gear system. The system includes a carrier having a plurality of openings or slots offset from a midline thereof; a stationary central gear; a plurality of peripheral planet gears, each said planet gear in a meshed relationship with the stationary central gear; and an alignment mechanism for substantially aligning each planet gear about the midline of the carrier.

An embodiment of the invention includes a method for balancing a load on a planetary gear system between the planet gears. The method includes forming oversized openings or slots within a carrier, the openings or slots being offset from a midline of the carrier; positioning alignment means within the oversized openings or slots, each alignment means having an opening which, when the alignment means are positioned, are substantially bisected by the midline of the carrier; securing the alignment means within the oversized openings or slots; and anchoring the planet gears about the alignment means openings.

Various features, aspects and advantages of the present invention may be further understood and/or illustrated when the following detailed description is considered along with the attached drawings, in which:
FIG. 1 is a schematic view of a conventional carrier illustrating unbalanced loads on planet gears.
FIG. 2 is a schematic view illustrating manufacturing variances of conventional gear teeth of a planet gear.
FIG. 3 is a schematic view of the carrier of FIG. 1 illustrating the effect the unbalanced load has on the true positions of the planet gears.
FIGS. 4-7 are schematic views illustrating the effect that rotational movement of a conventional carrier, or ring gear, has on the balance of loads between four planet gears within a carrier.
FIG. 8 is a graph illustrating the influence of carrier stiffness on the overall stiffness of a gear system.
FIG. 9 is a schematic view of a carrier and an eccentric disk in accordance with an embodiment of the invention.
FIG. 10 is a schematic view of the carrier of FIG. 9 with the eccentric disk in place in accordance with an embodiment of the invention.
FIG. 11 is a perspective view of a carrier with eccentric disks in accordance with an embodiment of the invention.
FIG. 12 is another perspective view of the carrier of FIG. 11.
FIGS. 13 (A) and (B) are cut-away views showing anchoring techniques for the eccentric disk in accordance with embodiments of the invention.
FIG. 14 is a perspective view of a carrier with inserts in accordance with an embodiment of the invention.
FIG. 15 is a schematic view of the carrier and insert of FIG. 14.
FIG. 16 is a schematic view of the insert positioned within a slot of the carrier of FIG. 14.
FIG. 17 is a schematic view of the insert anchored into position in a slot of the carrier of FIG. 14.
FIG. 18 illustrates a process for balancing a load on a planetary gear system between the individual planet gears.

The present specification provides certain definitions and methods to better define the embodiments and aspects of the invention and to guide those of ordinary skill in the art in the practice of its fabrication. Provision, or lack of the provision, of a definition for a particular term or phrase is not meant to imply any particular importance, or lack thereof; rather, and unless otherwise noted, terms are to be understood according to conventional usage by those of ordinary skill in the relevant art.

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation. If ranges are disclosed, the endpoints of all ranges directed to the same component or property are inclusive and independently combinable (e.g., ranges of "up to about µwt.%, or, more specifically, about 5 wt.% to about 20 wt.%," is inclusive of the endpoints and all intermediate values of the ranges of "about 5 wt.% to about 25 wt.%," etc.).

The modifier "about" used in connection with a quantity is inclusive of the stated value and has the meaning dictated by the context (e.g., includes the degree of error associated with measurement of the particular quantity). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

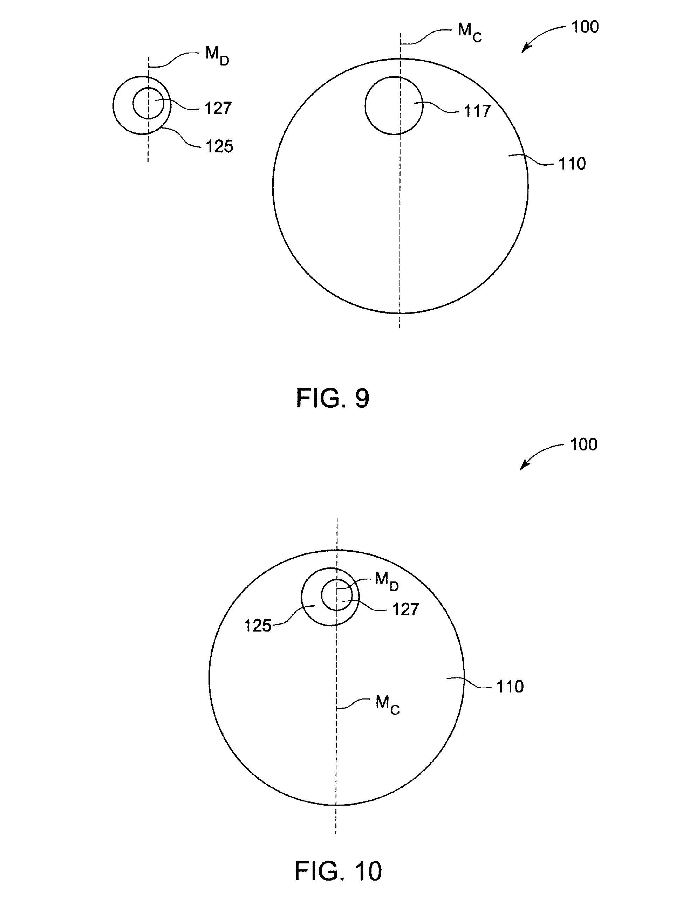

FIGS. 9-11 illustrate a planetary gear system 100 including a carrier 110. The carrier, as schematically shown in FIGS. 9 and 10, has an opening 117 formed therein. It is to be understood that a multiple of openings 117 are to be formed in the carrier 110 for a planetary gear system having multiple planet gears. Opening 117 differs from opening 17 in that it is larger. The larger openings 117 may be formed using the same equipment used to form openings 17, thereby allowing the larger openings 117 to maintain the same true position tolerance as the openings 17 have.

The carrier 110 includes a midline M_{C} which bisects the carrier 110. As shown, the midline M_{C} does not bisect the opening 117, as the opening is offset from the midline M_{C}. An eccentric disk 125 is provided with an eccentric opening 127. The disk 125 includes a midline M_{D}. The opening 127 is offset from the midline M_{D}.

It is envisioned that batches of eccentric disks 125 with a particular offset can be fabricated. For example, a batch of disks 125 can be formulated to handle an offset of, for example, 0.1 millimeters, 0.075 millimeters, 0.05 millimeters, or 0.025 millimeters. So, if for example, an opening 117 is offset from the midline M_{C} of the carrier 110 by 0.088 millimeters, a disk 125 formulated to handle a 0.1 millimeter offset would be used, thus positioning a planet gear having only a 0.012 offset from the midline M_{C} of the carrier 110. Any offset below 0.0125 millimeters is to be considered substantially aligned, and such substantial alignment is capable of reducing the overall load imbalance on the planet gears by as much as eight to ten percent.

The eccentric disk 125 is positioned within the opening 117 (FIG. 10) so as to render the disk non-rotatable. Further, the disk 125 is positioned such that the midline M_{D} coincides with the midline M_{C}. To ensure that the disk 125 is properly positioned, both the disk 125 and the carrier 110 in the vicinity of the opening 117 are marked so that the mark on the disk 125 matches the mark on the carrier opening 117. One method for positioning the disk 125 in the opening 117 is to cool the disk 125 down, allowing it to contract in size, positioning it in the opening 117, and allowing it to warm up and expand in size to the point where it has a friction fit with the opening 117.

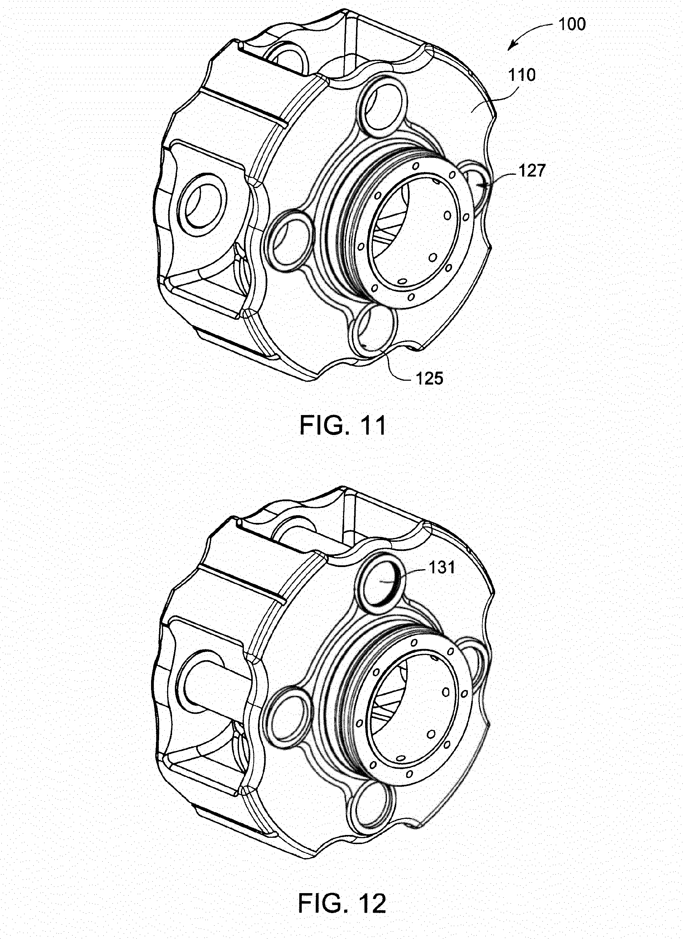

To further ensure non-rotation of the disk 125, the disk can be cooled down and an adhesive material can be added to the disk. Once the disk 125 is positioned in the opening 117 and allowed to warm up and expand in size, the disk can adhere to the surface of the opening 117. FIG. 11 illustrates a plurality of disks 125 positioned in a carrier 110.

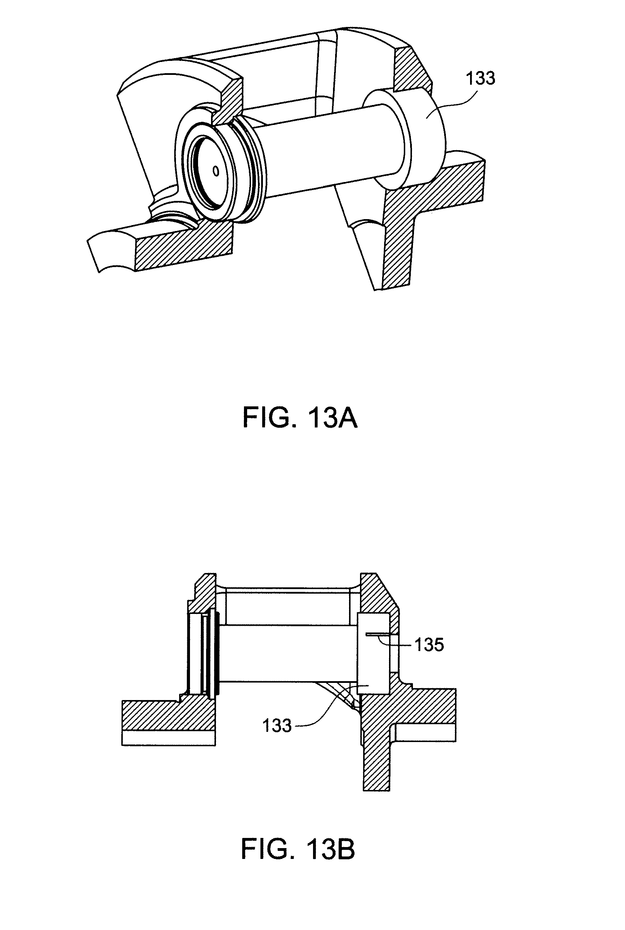

FIG. 12 illustrates pins 131 positioned within the disks 125. The pins 131 serve as anchoring points for the planet gears. FIGS. 13 (A) and (B) illustrate alternative methods for securing the pins 131 within the carrier 110. As shown in FIG. 13 (A), a bolt 133 can be added to one side of the carrier 110 concentric with the disk 125. As shown in FIG. 13 (B), a peg and slot assembly 135 is provided in the bolt 133. The bolt has a slot into which a peg is located to prevent rotation of the bolt 133 and the disk 125. It is to be understood that other methods for rendering the disks 125 non-rotatable may be employed. For example, the disks 125 may be coated with friction-enhancing coatings. Further, the openings 117 may include one or more indents into which respective knurls located on the disks 125 fit. Alternatively, the disks 125 may include a key that would fit within a notch found in the openings 117.

The eccentric disks 125 serve to properly align the planet gears, such as planet gears 16, both axially and radially. Through such alignment of all the planet gears 16 in their true positions, the load placed on any single planet gear can be balanced with the load placed on the remaining planet gears.

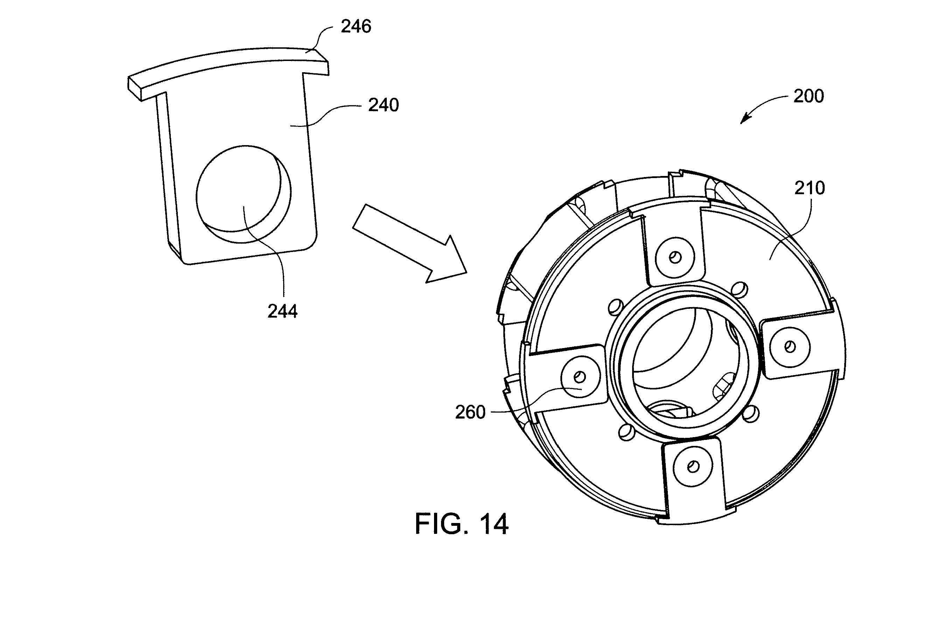

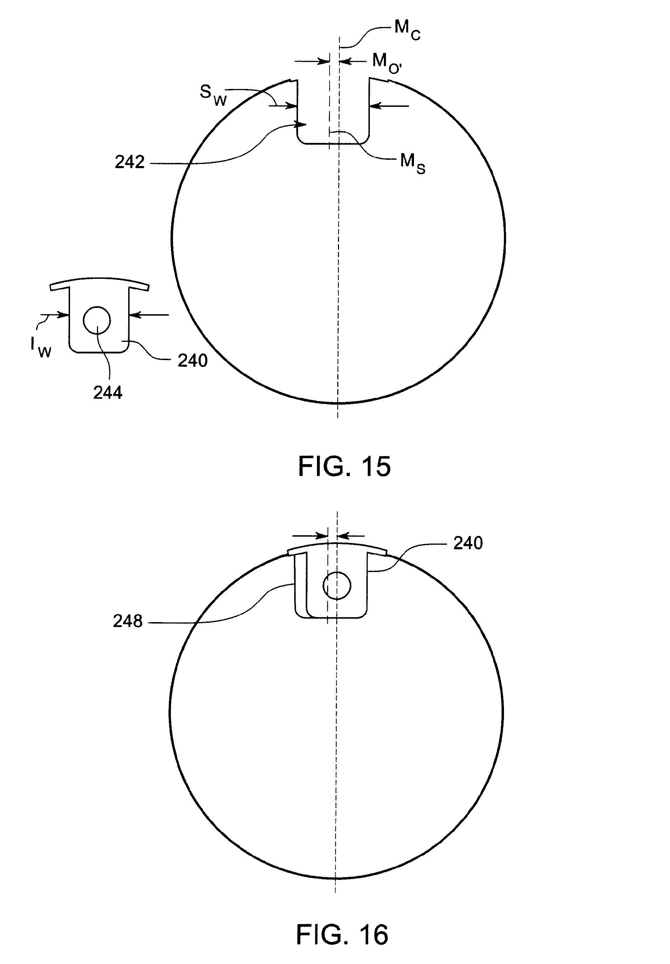

FIG. 14 illustrates a planetary gear system 200 including a carrier 210. The carrier 210 includes a plurality of inserts 240. Each insert includes an opening 244 and a flange 246. Although illustrated as curved, the flange 246 alternatively may be straight. FIG. 15 illustrates a slot 242 formed in a carrier, such as carrier 210. It is to be understood that multiple slots 242 are formed in the carrier 210 to accommodate multiple inserts and, ultimately, multiple planet gears.

The slot 242 has a width S_{W} and a midline M_{S} bisecting the width. The midline M_{S} is offset M_{O}' from the midline M_{C} of the carrier 210. The insert 240 has a width I_{W} and includes an opening 244. The width I_{W} of the insert 240 is shorter than the width S_{W} of the slot 242 (FIG. 16), leading to a gap 248 between the insert 240 and the slot wall 242. The insert 240 is positioned within the slot 242 such that the opening 244 is bisected by the midline M_{C} of the carrier 210.

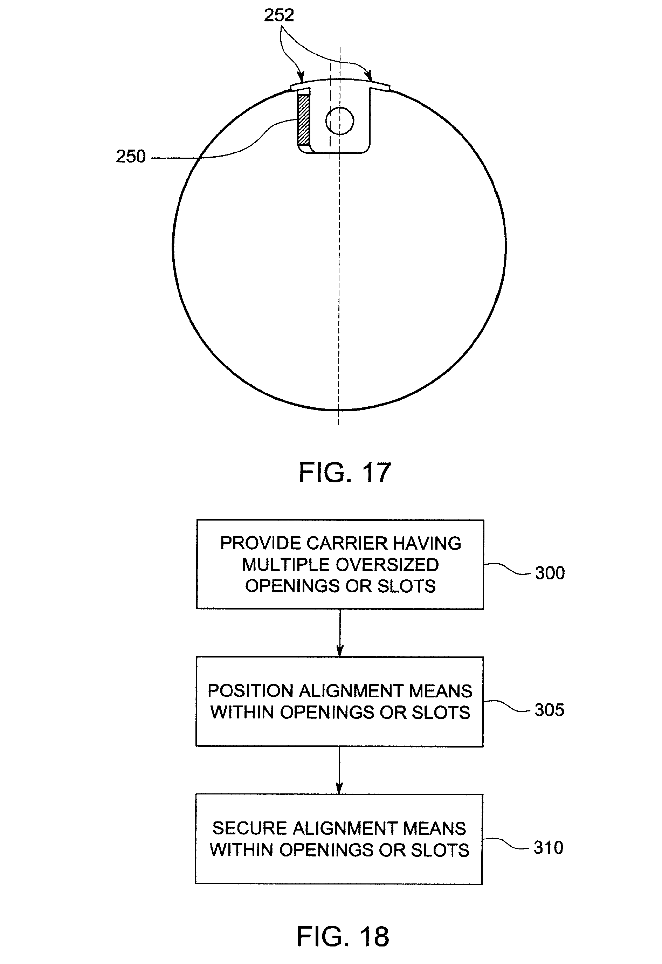

A shim 250 may be placed within the gap 248 to immobilize the insert 240 into place within the slot 242 (FIG. 17). As illustrated, a single shim 250 may be located within the gap 248, forcing the insert into an abutting relationship with a wall of the slot 242. Alternatively, and based upon the positioning of a midline of the opening 244 coinciding with the midline M_{C} of the carrier, two shims 250 of different sizes may be positioned within gaps 248 on either side of the insert 240.

An adhesive material may also be used to immobilize the insert 240 within the slot 242. Further, attachment means 252 may be inserted through the flange 246 into the carrier 210 to ensure immobilization of the insert 240. The attachment means may take any suitable form, such as, for example, screws, nails, pins, brads, staples, adhesive material, clamps, or any other like means.

Planet gears, such as planet gears 16, are to be anchored, via pins positioned in the openings 244 of the inserts 240. In this way, the planet gears may be tangentially aligned to better balance the load between planet gears. The use of inserts 240 ensures no rotational movement of the planet gears about the midline M_{C} of the carrier 210.

The openings 244 are sized to receive pins 260, upon which the planet gears are anchored. Alternatively, the openings 244 may be formed oversized and eccentric disks, such as disks 125, can be placed within the openings 244 as described previously, with the pins 260 being received in the openings of the eccentric disks. In this way, the planet gears can be maintained axially and radially about the midline M_{C} of the carrier 210.

Next, and with particular reference to FIG. 18, is described a method for balancing a load placed upon a planetary gear system, such as a planetary gear system used in a wind turbine.

At Step 300, a carrier is provided. For a planetary gear system having four planet gears, four openings or slots are formed in the carrier. The openings, such as openings 117, or the slots, such as slots 242, are formed oversized. Further, the central line of the openings or slots may be offset somewhat from a midline of the carrier. The openings may be formed through a boring technique, while the slots may be formed through a machining technique.

At Step 305, alignment means are positioned within the openings or slots. The alignment means for openings are eccentric disks, such as disks 125. The disks 125 have openings 127 that are offset from a midline of the disks 125. To ensure that the eccentric disk is properly positioned, both the disk and the carrier in the vicinity of the oversized opening are marked so that the mark on the disk matches the mark on the carrier opening.

The alignment means for slots are inserts, such as inserts 240. The slots have a width and a midline which bisects the width. The slot midlines are offset from the midline of the carrier. The inserts have a width and each includes an opening. The width of the insert is shorter than the width of the slot, leading to a gap between each insert and the slot walls. The inserts are positioned within the slots such that the insert openings are bisected by the midline of the carrier.

At Step 310, the alignment means are secured within the openings or slots. One method for securing the eccentric disk in position in the opening is to pre-cool the disk, allowing it to contract in size, prior to positioning it in the opening. Once positioned in the opening, the eccentric disk is allowed to be warmed up and expands in size to the point where it has a friction fit with the opening.

To further ensure non-rotation of the disk, it can be cooled down and an adhesive material can be added to the disk. Once the disk is positioned in the opening and allowed to warm up and expand in size, the disk can adhere to the surface of the opening.

A shim may be placed within the gap to secure the inserts into place within the slots. A single shim may be located within each gap between an insert and a slot wall, forcing the insert into an abutting relationship with a wall of the slot. Alternatively, and based upon the positioning of a midline of the openings coinciding with the midline of the carrier, two shims of different sizes may be positioned within a pair of gaps on either side of the inserts in each slot.

The inserts may be immobilized within the slots with an adhesive material. Further, attachment means may be inserted through curved flanges on the inserts into the carrier to ensure immobilization of the inserts. The attachment means may take any suitable form, such as, for example, screws, nails, pins, brads, staples, adhesive material, clamps, or any other like means.

Various of the embodiments of the invention described herein enable an increase in torque capacity, as well as an improved load distribution, for a planetary gearbox. Further, these enhancements are enabled with a minimum of overall mass impact on the gearbox.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. For example, while embodiments have been described in terms that may initially connote singularity, it should be appreciated that multiple components may be utilized. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A carrier for use in a planetary gear system and having a plurality of openings or slots offset from a midline thereof, said carrier comprising alignment mechanisms positioned in each of the plurality of openings or slots to substantially align each planet gear about the midline of the carrier.
2. The carrier of clause 1, wherein said alignment mechanisms comprise non-rotating eccentric disks.
3. The carrier of any preceding clause, comprising a non-rotation means for rendering the eccentric disks non-rotating in the plurality of openings taken from the group consisting of an adhesive material, a peg and slot assembly, a key and notch assembly, and a knurl and indent assembly.
4. The carrier of any preceding clause, wherein said alignment mechanisms comprise inserts, each of the inserts having a width less than a width of each of the plurality of slots.
5. The carrier of any preceding clause, comprising shims positioned within a gap between a wall of each of the plurality of slots and the inserts for immobilizing the inserts within each of the plurality of slots.
6. A planetary gear system, comprising:
   a carrier having a plurality of openings or slots offset from a midline thereof;
   a rotating central gear;
   a plurality of peripheral planet gears, each said planet gear in a meshed relationship with the rotating central gear; and
   an alignment mechanism for substantially aligning each said planet gear about the midline of the carrier.
7. The planetary gear system of any preceding clause, wherein the alignment mechanism comprises a non-rotating eccentric disk.
8. The planetary gear system of any preceding clause, comprising immobilizing means for immobilizing the eccentric disk within one of the plurality of openings taken from the group consisting of adhesive material, peg and slot assembly, key and notch assembly, and knurl and indent assembly.
9. The planetary gear system of any preceding clause, wherein the alignment mechanism comprises an insert positioned within one of the plurality of slots.
10. The planetary gear system of any preceding clause, comprising shims positioned within a gap between a wall of each of the plurality of slots and the inserts for immobilizing the inserts within each of the plurality of slots.
11. The planetary gear system of any preceding clause, for use in a wind turbine.
12. A method for balancing a load on a planetary gear system between respective planet gears, comprising:
   forming oversized openings or slots within a carrier, the openings or slots being offset from a midline of the carrier;
   positioning alignment means within the oversized openings or slots, each alignment means having an opening which, when the alignment means are positioned, are substantially bisected by the midline of the carrier;
   securing the alignment means within the oversized openings or slots; and
   anchoring the planet gears about the alignment means openings.
13. The method of any preceding clause, wherein said forming comprises boring oversized openings or machining oversized slots.
14. The method of any preceding clause, wherein said positioning comprises:
   forming an eccentric disk, the eccentric disk having an eccentrically located opening;
   cooling the eccentric disk down;
   locating the eccentric disk within one of the oversized openings such that the eccentrically located opening substantially bisects the midline of the carrier; and
   warming the eccentric disk up.
15. The method of any preceding clause, wherein said securing comprises coating either or both of the eccentric disk and one of the oversized openings with an adhesive material.
16. The method of any preceding clause, wherein said securing comprises placing an immobilizing means between the eccentric disk and one of the oversized openings.
17. The method of any preceding clause, wherein the immobilizing means comprises one from the group consisting of peg and slot assembly, key and notch assembly, and knurl and indent assembly.
18. The method of any preceding clause, wherein said positioning comprises:
   forming an insert, the insert having an opening and a width that is shorter than a width of one of the oversized slots; and
   locating the insert in one of the oversized slots such that the insert opening substantially bisects the midline of the carrier.
19. The method of any preceding clause, wherein said securing comprises placing a shim within a gap between the insert and a wall of one of the oversized slots.
20. The method of any preceding clause, wherein said securing comprises employing attachment means for attaching an insert to the carrier within one of the oversized slots.

## Claims

1. A carrier (110) for use in a planetary gear system (100) and having a plurality of openings (117) or slots (242) offset from a midline (M_{C}) thereof, said carrier comprising alignment mechanisms (125, 240) positioned in each of the plurality of openings or slots to substantially align each planet gear about the midline of the carrier.

2. The carrier (110) of claim 1, wherein said alignment mechanisms comprise non-rotating eccentric disks (125).

3. The carrier (110) of claim 2, comprising a non-rotation means (135, 139) for rendering the eccentric disks (125) non-rotating in the plurality of openings taken from the group consisting of an adhesive material, a peg and slot assembly, a key and notch assembly, and a knurl and indent assembly.

4. The carrier (110) of any preceding claim, wherein said alignment mechanisms (125, 240) comprise inserts (240), each of the inserts having a width less than a width of each of the plurality of slots.

5. The carrier of claim 4, comprising shims (250) positioned within a gap (248) between a wall of each of the plurality of slots and the inserts for immobilizing the inserts within each of the plurality of slots.

6. A planetary gear system (100), comprising:
a carrier (110) having a plurality of openings (117) or slots (242) offset from a midline (M_{C}) thereof;
a rotating central gear (14);
a plurality of peripheral planet gears (16), each said planet gear in a meshed relationship with the rotating central gear; and
an alignment mechanism (125, 240) for substantially aligning each said planet gear about the midline of the carrier.

7. The planetary gear system (100) of claim 6, wherein the alignment mechanism comprises a non-rotating eccentric disk (125).

8. The planetary gear system (100) of claim 6 or claim 7, comprising immobilizing means (135, 139) for immobilizing the eccentric disk within one of the plurality of openings taken from the group consisting of adhesive material, peg and slot assembly, key and notch assembly, and knurl and indent assembly.

9. The planetary gear system (100) of any of claims 6 to 8, wherein the alignment mechanism comprises an insert (240) positioned within one of the plurality of slots.

10. The planetary gear system (100) of any of claims 6 to 9, comprising shims (250) positioned within a gap (248) between a wall of each of the plurality of slots and the inserts for immobilizing the inserts within each of the plurality of slots.

11. The planetary gear system (100) of any of claims 6 to 10, for use in a wind turbine.
